# EUROPÄISCHE PATENTANMELDUNG

(11) **EP 4 209 322 A1**
(43) Veröffentlichungstag der Anmeldung: **12.07.2023**
(21) Anmeldenummer: 22150934.2
(22) Anmeldetag: 11.01.2022
(51) Int. Cl.: B29C 45/37, B25D 17/00, B29K 21/00

(54) **MATERIAL, SEINE VERWENDUNG IM BEREICH VON WERKZEUGMASCHINEN UND HERSTELLUNGSVERFAHREN**

(71) Anmelder: Hilti Aktiengesellschaft, 9494 Schaan (LI)
(72) Erfinder: Spomer, Andreas, 51105 Köln (DE); Seltmann, Daniel, 86899 Landsberg am Lech (DE); Kummer, Maximilian, 89077 Ulm (DE)
(74) Vertreter: Hilti Aktiengesellschaft Corporate Intellectual Property

(57) **Zusammenfassung**

Die vorliegende Erfindung betrifft ein Material, das mindestens eine thermoplastisches Elastomermaterial umfasst. Eine Texturtiefe des Materials liegt in einem Bereich von 200 bis 300 µm, bevorzugt in einem Bereich von 230 bis 270 µm, mehr bevorzugt in einem Bereich von 245 bis 255 µm und am meisten bevorzugt bei ca. 250 µm. In weiteren Aspekten betrifft die Erfindung eine Verwendung des Materials als Oberflächenmaterial bei Werkzeugmaschinen, sowie ein Verfahren zur Herstellung eines Objekts mit einer Mikrostruktur. Bei der Herstellung der Objekte können Spritzgussformen zum Einsatz kommen, die eine Gegenstruktur zu der gewünschten Mikrostruktur des Objekts aufweisen. Das Material und die daraus hergestellten Objekte haben sich als überraschend robust, strapazierfähig und rutschhemmend erwiesen, so dass sie besonders gut für die Herstellung von Griffen für Werkzeugmaschinen geeignet sind.

## Beschreibung

Die vorliegende Erfindung betrifft ein Material, das mindestens eine thermoplastisches Elastomermaterial umfasst. Eine Texturtiefe des Materials liegt in einem Bereich von 200 bis 300 µm, bevorzugt in einem Bereich von 230 bis 270 µm , mehr bevorzugt in einem Bereich von 245 bis 255 µm und am meisten bevorzugt bei ca. 250 µm. In weiteren Aspekten betrifft die Erfindung eine Verwendung des Materials als Oberflächenmaterial bei Werkzeugmaschinen, sowie ein Verfahren zur Herstellung eines Objekts mit einer Mikrostruktur. Bei der Herstellung der Objekte können Spritzgussformen zum Einsatz kommen, die eine Gegenstruktur zu der gewünschten Mikrostruktur des Objekts aufweisen. Das Material und die daraus hergestellten Objekte haben sich als überraschend robust, strapazierfähig und rutschhemmend erwiesen, so dass sie besonders gut für die Herstellung von Griffen für Werkzeugmaschinen geeignet sind.

### Hintergrund der Erfindung:

Im Stand der Technik sind Werkzeugmaschinen mit Handgriffen bekannt. Die Griffe der Werkzeugmaschine sind häufig aus Kunststoffen gefertigt, die beispielsweise leicht verschmutzen können, wenig robust sind, nicht gut in der Hand liegen oder dem Nutzer leicht aus der Hand gleiten. Solche Griffe können daher ein Sicherheitsrisiko darstellen oder das Arbeiten mit der Werkzeugmaschine wenig komfortabel oder angenehm erscheinen lassen.

Die Aufgabe, die der vorliegenden Erfindung zugrunde liegt, besteht darin, die vorstehend beschriebenen Mängel und Nachteile des Standes der Technik zu überwinden und ein verbessertes Material zur Verwendung im Bereich von Werkzeugmaschinen anzugeben, das besonders sicher, angenehm zu berühren und nutzerfreundlich ist.

Die Aufgabe wird gelöst durch den Gegenstand der unabhängigen Ansprüche. Vorteilhafte Ausführungsformen zu dem Gegenstand der unabhängigen Ansprüche finden sich in den abhängigen Ansprüchen.

### Beschreibung der Erfindung:

Erfindungsgemäß ist ein Material vorgesehen, wobei das Material thermoplastische Elastomere umfasst. Das Material ist dadurch gekennzeichnet, dass eine Texturtiefe des Materials in einem Bereich von 200 bis 300 µm liegt. In einer bevorzugten Ausgestaltung der Erfindung kann die Texturtiefe des Materials in einem Bereich von 230 bis 270 µm liegen. Es ist noch stärker bevorzugt, dass die Texturtiefe des Materials in einem Bereich von 245 bis 255 µm liegt, wobei die Texturtiefe des Materials in einem am meisten bevorzugten Ausführungsbeispiel der Erfindung bei ca. 250 µm liegt. Es ist im Sinne der Erfindung bevorzugt, dass das vorgeschlagene Material durch Spritzgießen hergestellt wird, wobei insbesondere laserstrukturierte Spritzformen zum Einsatz kommen können. Vorzugsweise werden bei der Herstellung des vorgeschlagenen Materials Spritzguss-Formen verwendet, deren Berge und/oder Täler Höhen von beispielsweise 100 bis 150 µm,bevorzugt 115 bis 135 µm und mehr bevorzugt 120 bis 130 µm aufweisen, wobei diese Spritzguss-Formen vorteilhafterweise zu dem Material mit der Texturtiefe von ca. 250 µm führt. Mit anderen Worten fällt die erhaltene Texturtiefe des Materials geringer aus als die Höhe der Berge und/oder Täler der Spritzguss-Formen, die zur Herstellung des Materials verwendet werden. Tests haben gezeigt, dass das Material mit der genannten Textur überraschend gut entformt werden kann, so dass das Herstellungsverfahren einfach durchgeführt werden kann und besonders wenig unbrauchbares Ausschuss-Material hervorbringt. Es ist im Sinne der Erfindung bevorzugt, dass die Berge der Spritzgussformen die Täler auf der Oberfläche der durch das Verfahren erzeugten Objekte bilden, während die Täler der Spritzgussformen die Berge auf der Oberfläche der durch das Verfahren erzeugten Objekte bilden. Dabei weisen die Mikrostrukturen (die Berge und Täler) auf der Oberfläche der hergestellten Objekte vorzugsweise etwa die halbe Höhe oder Tiefe der Strukturen in der Spritzgussform auf. Die Spritzgussform ist vorzugsweise durch Laserstrukturierung hergestellt. Das bedeutet im Sinne der Erfindung bevorzugt, dass insbesondere die Berge und Täler in der Spritzgussform, die später die Mikrostruktur auf der Oberfläche der erzeugten Objekte bilden, durch Laserstrukturierung erzeugt werden. Es ist im Sinne der Erfindung bevorzugt, dass die Spritzgussform auch als «Werkzeuge» bezeichnet werden.

Es war überraschend, dass die gespritzten Objekte so gut aus den Spritzgussformen entnommen werden können, ohne dass Beschädigungen an den Objekten auftreten. Dies war umso überraschender, als dass die Berge und Täler der gespritzten Objekte um beispielsweise bis zu 300 µm aus einer Ebene des Materials herausragen. Die Berge und Täler auf dem hergestellten Objekt, der beispielsweise ein Handgriff für eine Werkzeugmaschine sein kann, bilden vorzugweise eine Mikrostruktur, wobei die höchsten Punkte beispielsweise um bis zu 150 µm aus einer mittleren Ebene des Objekts herausragen. Insbesondere war es überraschend, dass die durch das Spritzgussverfahren erzeugte Mikrostruktur quer zur Richtung einer Zwangsentformung aus der Spritzgussform entnommen werden kann, wobei überraschenderweise keine oder kaum Beschädigungen oder Riefen in den auf diese Weise hergestellten Objekten beobachtet werden. Mit anderen Worten war es vollkommen überraschend, dass die Zwangsentfomung der hergestellten Objekte so beschädigungsfrei erfolgen kann, obwohl einzelne Bestandteile der Mikrostruktur des hergestellten Objekts um bis zu 150 µm aus dem Material herausragen. Es stellt einen wesentlichen Vorteil der Erfindung dar, dass mit Hilfe der Kombination der erfindungsgemäßen Texturtiefe der Mikrostruktur in Verbindung mit dem verwendeten thermoplastischen Elastomeren als Grundmaterial eine so beschädigungsfreie und unkomplizierte Zwangsentformung der erzeugten Spritzguss-Objekte ermöglicht werden kann. Die erzeugten Spritzguss-Objekte weisen Mikrostrukturen insbesondere quer zum Entformungsrichtung auf, wobei diese Mikrostrukturen besonders beschädigungsfrei aus der Spritzgussform entnommen werden können.

Eine weitere Überraschung stellt es dar, dass das Material, das zum Spritzgießen verwendet wird, die Berge und Täler, die in der bevorzugt laserstrukturieren Spritzgussform eingebracht sind, so gut abbildet, obwohl einzelne Bestandteile der Mikrostruktur der bevorzugt laserstrukturieren Spritzgussform um bis zu 125 µm in das Material der Spritzgussform hineinragen und so bis zu 125 µm Täler in der Spritzgussform bilden. Diese bis zu 125 µm tiefen Täler in der Spritzgussform bilden dann später vorzugsweise die bis zu 125 µm hohen Berge auf der Oberfläche der mit dem Verfahren hergestellten Objekte. Die Fachwelt war bisher davon ausgegangen, dass so tiefe Strukturen (bis zu 125 µm) Sachgassen für eingeschlossene Luft und somit auch für das verwendete Spritzgussmaterial bildet. Es war daher überraschend, dass dies bedingt durch das thermoplastische Elastomermaterial und die Tiefe der Spritzgussform von bis zu 125 µm im vorliegenden Fall nicht so ist und dass das Material die Berge und Täler der Spritzgussform besonders gut ausfüllt und nachbildet.

Es ist im Sinne der Erfindung bevorzugt, dass das Material ein Grundmaterial umfasst, welches die Kunststoffmaterialien Polyester und Polyurethan umfasst. Es ist im Sinne der Erfindung bevorzugt, dass das Grundmaterial des vorgeschlagenen Materials TPE-Materialien umfasst, d.h. thermoplastische Elastomere. Beispielsweise kann das Grundmaterial auch Polyurethan umfassen, wobei insbesondere auch Mischungen unterschiedlicher Kunststoffsorten bevorzugt sein kann, um das Grundmaterial bereitzustellen. Es ist im Sinne der Erfindung ganz besonders bevorzugt, dass Weichspritzmaterialien verwendet werden, d.h. Kunststoffmaterialien, die zum Spritzgießen verwendet werden können.

Das vorgeschlagene Material weist eine Oberflächentextur auf, dessen Eigenschaften insbesondere von den Höhenunterschieden zwischen den höchsten und den tiefsten Bereichen des Materials bestimmt wird. Der Abstand zwischen diesen höchsten und tiefsten Bereichen des Materials wird im Sinne der Erfindung bevorzugt als «Texturtiefe» bezeichnet. Mit anderen Worten kann das Material «Berge» als höchste Stellen und «Täler» als tiefste Stellen umfassen, wobei ein Höhenunterschied zwischen den höchsten und den tiefsten Stellen in einem Bereich von 200 bis 300 µm liegt, bevorzugt in einem Bereich von 230 bis 270 µm,mehr bevorzugt in einem Bereich von 245 bis 255 µm und am meisten bevorzugt bei 250 µm. Die Höhenunterschiede zwischen den Bergen und den Tälern des Materials wird im Sinne der Erfindung bevorzugt als «Texturtiefe» bezeichnet. Die Höhe der einzelnen Berge und Täler in Bezug auf eine gedachte Mittelebene des Materials liegt vorzugsweise in einem Bereich von 100 bis 150 µm,bevorzugt in einem Bereich von 115 bis 135 µm,mehr bevorzugt in einem Bereich von 120 bis 130 µm und am meisten bevorzugt bei 125 µm.

Es ist im Sinne der Erfindung bevorzugt, dass die Berge und die Täler des vorgeschlagenen Materials durch Lasern des Werkzeugs bzw. der Spritzgussformen zielgerichtet erzeugt werden, wodurch in Zusammenspiel mit dem Spritzguss-Verfahren die Texturtiefe des Materials in einem Bereich von ca. 250 µm erhalten wird. Die erzeugten Objekte können insbesondere durch ein Spritzguss-Verfahren erhalten werden, wobei die dabei verwendeten Spritzgussformen bzw. ihre Strukturierung durch eine Laserstrukturierung erhalten werden können. Mithin entstehen die hergestellten Objekte, die beispielsweise Griffe für Werkzeugmaschinen sein können, vorteilhafterweise durch eine Kombination des Herstellungsverfahrens «Spritzguss» und einer Laserstrukturierung der dazu verwendeten Spritzgussformen.

Das Material, welches durch das später beschriebene Herstellungsverfahren hergestellt werden kann und eine Texturtiefe in einem Bereich von 200 bis 300 µm aufweist, fühlt sich überraschend weich an und liegt gut in der Hand eines Nutzers. Tests haben gezeigt, dass das vorgeschlagene Mikromaterial trotz des rauhen Umfelds und den üblichen Arbeitsbedingungen auf einer Baustelle als Handschmeichler empfunden wird, so dass Werkzeugmaschinen, die mit dem Material versehen sind, als besonders hochwertig und angenehm in der Handhabung wahrgenommen werden. Darüber hinaus hat sich das vorgeschlagene Material als überraschend rutschhemmend erwiesen. Diese letztgenannte Eigenschaft verbessert den Grip, mit dem der Nutzer die Werkzeugmaschine hält, und kann ein wesentliches Sicherheitsmerkmal einer mit dem vorgeschlagenen Material beschichteten Werkzeugmaschine darstellen. Das Risiko des Kontrollverlusts über die Werkzeugmaschine kann durch die Verwendung des vorgeschlagenen Materials erheblich reduziert und die Betriebssicherheit auf diese Weise deutlich erhöht werden.

In einem zweiten Aspekt betrifft die Erfindung eine Verwendung des vorgeschlagenen Materials als Oberflächenmaterial bei Werkzeugmaschinen. Es ist im Sinne der Erfindung bevorzugt, dass das Material als Oberflächenmaterial beispielsweise für einen Griff der Werkzeugmaschine verwendet wird. Vorzugsweise werden bei der Herstellung der Griffe, die im Sinne der Erfindung abstrakt auch als «Objekte» bezeichnet werden, Hohlteile aus Stahl als Spritzgussformen verwendet, wobei die Spritzgussformen laserstrukturiert werden. Das heißt mit anderen Worten, dass die Berge und Täler in der Spritzgussform, die später die Täler und Berge des erzeugen Materials bzw. auf der Oberfläche der erzeugten Objekte bilden, durch Laserstrukturierung in die Spritzformen eingebracht werden. Es ist im Sinne der Erfindung bevorzugt, dass die Spritzgussformen einen Rauhtiefe von ca. 250 µm aufweisen. Das bedeutet im Sinne der Erfindung bevorzugt, dass beispielsweise die Täler in der Spritzgussform eine Tiefe von bis zu 125 µm aufweise. Die Objekte bzw. die Handgriffe werden dann mit Hilfe der bevorzugt laserstrukturierten Spritzgussformen hergestellt. Sie umfassen mindestens ein thermoplastisches Elastomermaterial, wobei die hergestellten Objekte eine Texturtiefe in einem Bereich von 200 bis 300 µm aufweisen. Die Oberfläche der hergestellten Objekte wird von einer Mikrostruktur gebildet, die Täler und Berge aufweisen kann.

Der Begriff «Werkzeugmaschine» soll im Sinne der Erfindung weit verstanden werden. Insbesondere sind mit dem Begriff klassische Werkzeugmaschinen gemeint, wie beispielsweise Schraubgeräte, Trenn- oder Schneidgeräte, Schleifgeräte, Sägen, Meißel, Kernbohrgeräte und einfache Bohrgeräte und/oder Setzgeräte, ohne darauf beschränkt zu sein. Der Begriff «Werkzeugmaschine» umspannt vorzugsweise aber auch Hilfsgeräte, wie zum Beispiel Staubsauger, Wassermanagement- oder Recyclinggeräte, Vorschubvorrichtungen oder externe Steuergeräte, ohne darauf beschränkt zu sein. Auch kann der Griff jede erdenkliche Form aufweisen, d.h. C-, T- oder D-förmig ausgebildet sein. Selbstverständlich kann der Griff, der zumindest teilweise mit dem vorgeschlagenen Material überzogen ist, auch stabförmig ausgebildet sein und/oder aus einem Gehäuse der Werkzeugmaschine herausragen.

Das vorgeschlagene Material, das aus einem Grundmaterial mit mindestens einem thermoplastischen Elastomer hergestellt werden kann und eine Texturtiefe in einem Bereich von 200 bis 300 µm aufweist, ist besonders vorteilhaft im Bereich der Werkzeugmaschinen, dort insbesondere im Bereich der Griffe, einsetzbar, da es überraschend strapazierfähig, robust und atmungsaktiv ist. Selbst bei starker Beanspruchung bleibt das vorgeschlagene Material intakt und behält seine nutzer- und hautfreundlichen Eigenschaften. Es hat sich in Anwendungstests gezeigt, dass das vorgeschlagene vorgeschlagene Material besonders allergieneutral ist und darüber hinaus antistatische Eigenschaften hat. Dadurch lädt sich der Bestandteil der Werkzeugmaschine, der mit dem vorgeschlagenen Material überzogen ist, nicht oder kaum elektrostatisch auf und unerwünschte elektrische Entladungen, die für den Nutzer unangenehm sein können, werden erheblich reduziert. Außerdem ist das vorgeschlagene Material besonders reinigungsfreundlich, da etwaige Verunreinigungen überraschend gut aus den besonders tiefen Tälern und von den besonders hohen Bergen des Materials entfernt werden können. Entgegen der Erwartung der Fachwelt sind die besonders tiefen Täler sehr gut zugänglich, so dass Staub und anderer Dreck besonders einfach von der Oberfläche des Materials entfernt werden können.

Ein weiterer Vorteil bei der Verwendung des vorgeschlagenen Materials im Bereich der Werkzeugmaschinen besteht darin, dass es besonders leicht ist, so dass mit dem Material vergleichsweise leichte Werkzeugmaschine bereitgestellt werden können.

In einem weiteren Aspekt betrifft die Erfindung ein Verfahren zur Herstellung eines Objekts mit einer Mikrostruktur, wobei das Verfahren durch folgenden Verfahrensschritte gekennzeichnet ist:
a) Bereitstellung eines Grundmaterials zur Herstellung des Objekts, wobei das Grundmaterial mindestens ein thermoplastisches Elastomer umfasst,
b) Bereitstellung von Spritzgussformen für die Herstellung des Objekts, wobei die Spritzgussform eine Gegenstruktur zu der Mikrostruktur des Objekts aufweist,
c) Spritzgießen des Objekts, wobei durch die Gegenstruktur der Spritzgussform die Mikrostruktur des Objekts entsteht.

Es ist im Sinne der Erfindung bevorzugt, dass die einzelnen Bestandteile der Gegenstruktur der Spritzgussform etwa doppelt so hoch oder tief wie die Bestandteile der Mikrostruktur des Objekts sind. Die Spritzgussformen bzw. ihre Gegenstruktur kann beispielsweise eine Rauhtiefe von 250 µm aufweisen, wobei die Höhe und Tiefe der Berge und Täler der Mikrostruktur des Objekts bei beispielsweise 125 µm liegen. Der Begriff «Gegenstruktur» bedeutet, dass aus den Bergen der Oberflächenstruktur der Spritzgussformen die Täler der Mikrostruktur des Objekts entstehen, während aus den Tälern der Oberflächenstruktur der Spritzgussformen die Berge der Mikrostruktur des hergestellten Objekts entstehen. Es ist im Sinne der Erfindung bevorzugt, dass eine Texturtiefe der Mikrostruktur in einem Bereich von 200 bis 300 µm liegt. Das bedeutet, dass die Berge und Täler der Oberfläche des hergestellten Objekts eine Höhe bzw. Tiefe von etwa 125 µm aufweisen.

Es ist im Sinne der Erfindung bevorzugt, dass die Oberflächenstruktur der Spritzgussformen, d.h. die Gegenstruktur, durch eine Laserstrukturierung erfolgt. Mit anderen Worten können die Spritzgussformen bzw. die Spritzguss-Werkzeuge durch einen bevorzugt vorgelagerten Verfahrensschritt der Laserstrukturierung erzeugt werden. Das bedeutet im Sinne der Erfindung bevorzugt, dass insbesondere die Gegenstruktur der Spritzgussformen unter Einsatz eines Lasers erzeugt wird.

Die Erfindung betrifft insbesondere auch alle Gegenstände, Geräte und/oder Geräteteile, die mit den beschriebenen Herstellungsverfahren hergestellt werden können.

Die Verarbeitung des vorgeschlagenen Materials im Bereich der Werkzeugmaschinen hat sich als besonders günstig erwiesen, da das Material überraschenderweise besonders materialsparend ohne große Verluste verarbeitet werden kann, obwohl beispielsweise der Handgriff einer Werkzeugmaschine eine komplexe äußere Form aufweisen kann. Diesen besonders Herausforderungen wird das vorgeschlagene Material in besonders geeigneter Weise gerecht. Die gute Verarbeitungsfähigkeit des vorgeschlagenen Materials ist insbesondere auf die überraschend gute Elastizität des Materials zurückzuführen, die insbesondere durch den Materialmix des zugrundeliegenden Grundmaterials und die Texturtiefe im Bereich von 200 bis 300 µm erreicht wird.

Die für das Material eingeführten Begriffe, Definitionen und technischen Vorteile gelten für die Verwendung des Materials im Bereich der Werkzeugmaschinen und für das Herstellungsverfahren analog.

Weitere Vorteile ergeben sich aus der folgenden Figurenbeschreibung. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert.

Es zeigen:
- Fig. 1: Ansicht einer bevorzugten Ausgestaltung eines Handgriffs einer Werkzeugmaschine mit dem vorgeschlagenen Material
- Fig. 2: schematische Ansicht einer bevorzugten Ausgestaltung der Oberflächenstruktur des Materials

### Ausführungsbeispiele und Figurenbeschreibung:

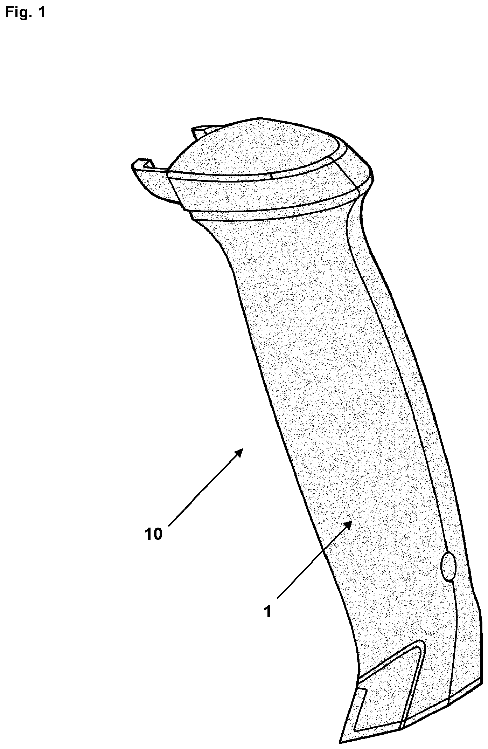

Figur 1 zeigt eine bevorzugte Ausführungsform eines Griffes (10) einer Werkzeugmaschine (nicht dargestellt). Die Oberfläche des Griffes (10) umfasst das vorgeschlagenen Material (1), wobei eine Texturtiefe (T) des Materials (1) in einem Bereich von 200 bis 300 µm liegt, bevorzugt in einem Bereich von 230 bis 270 µm, mehr bevorzugt in einem Bereich von 245 bis 255 µm und am meisten bevorzugt bei im Wesentlichen 250 µm. Der Begriff «im Wesentlichen» stellt für den Fachmann keinen unklaren Begriff dar, vielmehr weiß der Fachmann, dass sich kleinere Abweichungen von einer genauen Höhe oder Tiefe der Berge (4) oder Täler (5) des Materials (1) beispielsweise herstellungsbedingt ergeben können. Solche kleineren Abweichungen von beispielsweise +/- 3 µm sollen von dem Begriff «im Wesentlichen» umfasst sein. Die Berge (4) oder Täler (5) bilden vorzugsweise eine Mikrostruktur, welche die Oberfläche des Griffes (10) einer Werkzeugmaschine bilden kann. Es ist im Sinne der Erfindung bevorzugt, wenn die Mikrostruktur des Werkzeugmaschinengriffs (1) eine Texturtiefe (T) in einem Bereich von 200 bis 300 µm aufweist, bevorzugt in einem Bereich von 230 bis 270 µm, mehr bevorzugt in einem Bereich von 245 bis 255 µm und am meisten bevorzugt bei im Wesentlichen 250 µm.

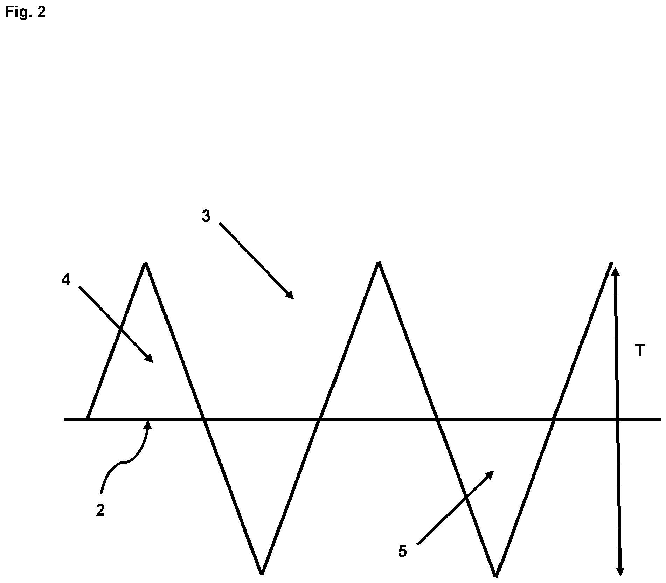

Ein schematisches Beispiel einer bevorzugten Ausgestaltung der Oberflächenstruktur (3) des Materials (1) wird in Fig. 2 dargestellt. Dort zu sehen ist die gedachte Mittelebene (2), von der ausgehend die Höhe der Berge (4) und die Tiefe der Täler (5) der Oberfläche des Material (1) bestimmt wird. Die Höhe dieser Berge (4) und die Tiefe dieser Täler (5) legen vorzugsweise die Texturtiefe (T) des vorgeschlagenen Materials (1) fest. Insbesondere stellt die Texturtiefe (T) den Abstand bzw. die Höhendifferenz zwischen den Spitzen der Berge (4) und den niedrigsten Stellen der Täler (5) dar.

Die gedachte Mittelebene (2) kann als Durchschnitt aller Höhen und Tiefen, d.h. aller Oberflächenstrukturen des Materials (1), betrachtet werden. Die gedachte Mittelebene (2) liegt somit bevorzugt auf halbem Wege zwischen den Bergspitzen und den Talgründen der Oberfläche des vorgeschlagenen Materials (1). Fig. 2 stellt eine stark schematisierte Darstellung einer möglichen Oberflächenstruktur (3) des Materials (1) dar, die insbesondere die Begriffe «Berge», «Täler» und «Texturtiefe» verdeutlichen soll. Insbesondere kann die in Fig. 2 schematisch dargestellte Oberfläche eine Oberfläche eines Griffes (10) einer Werkzeugmaschine bilden. Sie kann auch die Oberfläche eines beliebigen Objekts bilden, das mit dem vorgeschlagenen Herstellungsverfahren hergestellt wird.

### Bezugszeichenliste

- 1: Material
- 2: gedachte Mittelebene
- 3: Oberflächenstruktur
- 4: Berge
- 5: Täler
- 10: Griff einer Werkzeugmaschine

## Patentansprüche

1. Material (1) umfassend mindestens ein thermoplastisches Elastomer,
**dadurch gekennzeichnet, dass**
eine Texturtiefe des Materials (1) in einem Bereich von 200 bis 300 µm liegt.

2. Material (1) nach Anspruch 1,
**dadurch gekennzeichnet, dass**
die Texturtiefe des Materials (1) in einem Bereich von 230 bis 270 µm liegt.

3. Material (1) nach Anspruch 1 oder 2,
**dadurch gekennzeichnet, dass**
die Texturtiefe des Materials (1) in einem Bereich von 245 bis 255 µm liegt.

4. Verwendung des Materials (1) nach einem der Ansprüche 1 bis 3 als Oberflächenmaterial bei Werkzeugmaschinen.

5. Verwendung nach Anspruch 4
**dadurch gekennzeichnet, dass**
das Material (1) als Oberflächenmaterial für einen Griff (10) einer Werkzeugmaschine verwendet wird.

6. Verfahren zur Herstellung eines Objekts mit einer Mikrostruktur, wobei das Verfahren durch **folgenden Verfahrensschritte** gekennzeichnet ist:
a) Bereitstellung eines Grundmaterials zur Herstellung des Objekts, wobei das Grundmaterial mindestens ein thermoplastisches Elastomer umfasst,
b) Bereitstellung von Spritzgussformen für die Herstellung des Objekts, wobei die Spritzgussform eine Gegenstruktur zu der Mikrostruktur des Objekts aufweist,
c) Spritzgießen des Objekts, wobei durch die Gegenstruktur der Spritzgussform die Mikrostruktur des Objekts entsteht.

7. Verfahren nach Anspruch 6
**dadurch gekennzeichnet, dass**
eine Rauhtiefe der Spritzgussform in einem Bereich von 200 bis 300 µm liegt,
bevorzugt 230 bis 270 µm und mehr bevorzugt 240 bis 260 µm.

8. Verfahren nach Anspruch 6 oder 7
**dadurch gekennzeichnet, dass**
die Gegenstruktur der Spritzgussform durch Laserstrukturierung erhalten wird.

9. Verfahren nach einem der Ansprüche 6 bis 8
**dadurch gekennzeichnet, dass**
die Mikrostruktur des Objekts eine Texturtiefe in einem Bereich von 200 bis 300 µm aufweist, bevorzugt in einem Bereich von 230 bis 270 µm,besonders bevorzugt in einem Bereich von 245 bis 255 µm.
